(19) Europäisches Patentamt / European Patent Office / Office européen des brevets

(11) **EP 3 946 671 B1**

(12) **EUROPEAN PATENT SPECIFICATION**

(45) Date of publication and mention
of the grant of the patent:
**29.04.2026 Bulletin 2026/18**

(21) Application number: **20715869.2**

(22) Date of filing: **31.03.2020**

(51) International Patent Classification (IPC):
**B01D 15/18** (2006.01)    **B01D 15/26** (2006.01)
**B01D 15/36** (2006.01)    **B01D 15/38** (2006.01)
**B01J 20/24** (2006.01)    **B01J 20/28** (2006.01)

(52) Cooperative Patent Classification (CPC):
**B01D 15/1885; B01D 15/265; B01D 15/363;
B01D 15/3809; B01J 20/28033; B01J 20/286;
B01J 41/20; B01J 47/127**

(86) International application number:
**PCT/EP2020/059067**

(87) International publication number:
**WO 2020/201259 (08.10.2020 Gazette 2020/41)**

(54) **A CHROMATOGRAPHY PROCESS**

CHROMATOGRAFIEVERFAHREN

PROCÉDÉ DE CHROMATOGRAPHIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.04.2019 GB 201904522**

(43) Date of publication of application:
**09.02.2022 Bulletin 2022/06**

(73) Proprietor: **Cytiva BioProcess R&D AB
751 84 Uppsala (SE)**

(72) Inventors:
• **SCANLON, Ian
Stevenage Open Innovation, Bioscience Park
Stevenage Hertfordshire SG1 2FX (GB)**
• **GRONBERG, Anna
751 84 Uppsala (SE)**
• **TOWNSEND, Matthew
Stevenage Open Innovation, Bioscience Park
Stevenage Hertfordshire SG1 2FX (GB)**

(74) Representative: **Bedford, Grant Richard
Global Life Sciences Solutions Operations UK
Ltd
Amersham Place
Little Chalfont, Buckinghamshire HP7 9NA (GB)**

(56) References cited:
**WO-A1-2005/077528    WO-A1-2008/127087
US-A1- 2014 263 012**

## EP 3 946 671 B1

**Description**

TECHNICAL FIELD OF THE INVENTION

The present invention relates to a chromatography process for purification of a target biomolecule.

BACKGROUND

Historically, conventional packed bed chromatography using porous beads has been an extremely powerful separation tool. In a porous bead-based system, the binding event between target molecule/impurity and the solid phase is dependent on diffusion into the porous bead. There is therefore a strong correlation between the residence time in a porous bead-based system and flowrate. Thus, binding capacity drops off with decreasing residence times. This type of chromatography can be called diffusion-based chromatography. A diffusion-based chromatography matrix includes any matrix which consists of particles and substantially exhibits a diffusion limitation of mass transfer, in that the rate of the adsorption and desorption processes is determined by the diffusion rate of the substance(s) into and out of the particles owing to the diffusion coefficients of the substance(s), which depend very heavily on the size, or the molecular weight, of the substances.

As alternatives to porous bead-based systems, monoliths or membranes may be used. The flow through such materials is convective rather than diffusional, and their binding capacity is therefore far less sensitive to flow than porous bead-based systems. These materials can be run at far higher flowrates than porous bead-based materials. In (membrane) adsorption chromatography, in contrast to gel-permeation chromatography, there is binding of components of a fluid, for example individual molecules, associates or particles, to the surface of a solid in contact with the fluid. The advantage of membrane adsorbers over packed chromatography columns is their suitability for being run with much higher flow rates. Conversely, however, membrane adsorbers have a lower dynamic capacity than, for example, gel-permeation chromatography columns. This is also called convection-based chromatography. A convection-based chromatography matrix includes any matrix in which application of a hydraulic pressure difference between the inflow and outflow of the matrix forces perfusion of the matrix, achieving substantially convective transport of the substance(s) into the matrix or out of the matrix, which is effected very rapidly at a high flow rate.

Convection-based chromatography and membrane adsorbers are described in for example US20140296464A1, US20160288089A1, WO2018011600A1 and WO2018037244A1. A parallel assembly of chromatography column modules is described in US 2014/263012 A1, a porous adsorptive or chromatography media in WO 2005/077528 A1 and a method and device for continuous membrane adsorption in WO 2008/127087 A1.

The connection of chromatography units in parallel for increasing capacity is often problematic due to small differences in the different units which will lead to an uneven flow distribution through the different units. Hereby some of the units will not be optimally used. Furthermore a peak broadening of the eluted sample after chromatography is often the result when chromatography units are connected in parallel due to the non-uniform fluid flow through the units.

Hereby, either chromatography units which are as uniform as possible need to be provided for such systems and/or other control arrangements are needed for controlling the fluid flow between the units.

SUMMARY

The present invention, as defined by the appended claims, is thus provided.

BRIEF DESCRIPTION OF THE DRAWINGS

Figure 1 is a schematic picture of chromatography units connected in parallel.

Figure 2 is a photo showing the parallel connection of the units.

Figure 3 is an example of a chromatogram from the cycling study.

Figure 4 shows overlay of UV and pressure curves every 10th cycle (1 to 51), cycle after CIP.

Figure 5 shows overlay of UV and pressure curves every 10th cycle (61 to 101), cycle after CIP.

Figure 6 shows delta column pressure during loading, elution and re-equilibration and relative elution peak area (A300 nm) for all cycles 1-101 (CIP with 1.0 M NaOH every 10th cycle).

Figure 7 shows recovery and eluate volumes from single cycles, pools of eluates from 2 cycles, and bulk pool from 45 cycles.

Figure 8 shows HCP and leaked ligand in eluates from single cycles, pools of eluates from 2 cycles, and bulk pool from 45 cycles.

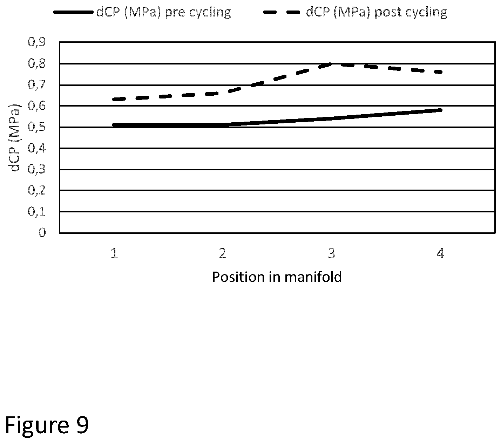

Figure 9 shows dCP of the different units in the manifold before and after cycling.

Figure 10 shows a chromatogram for a loading and elution experiment with bovine serum albumin on two parallel manifolded units with polyallylamine ligands.

Figure 11 shows a chromatogram for adeno associated virus serotype 2 (AAV-2) on two parallel manifolded units with polyallylamine ligands.

DETAILED DESCRIPTION OF EMBODIMENTS

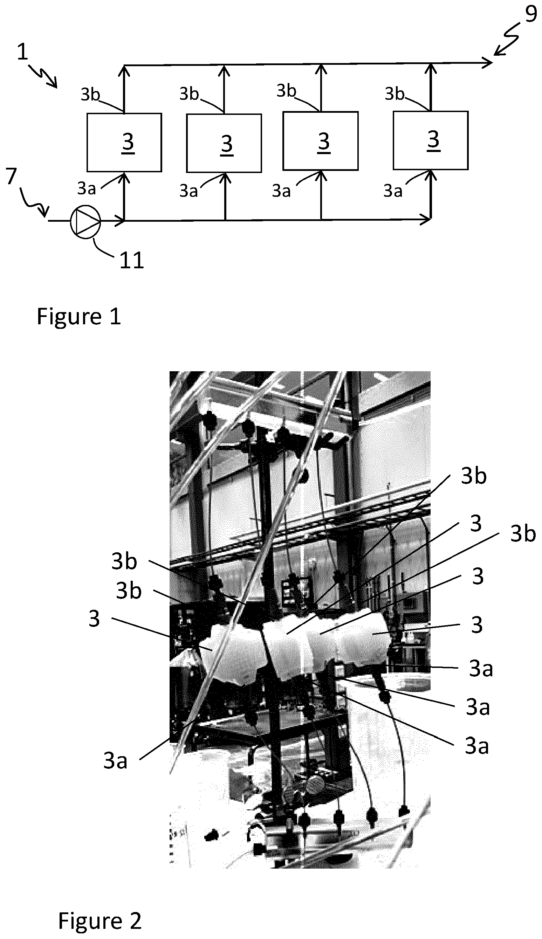

The invention relates to a chromatography system 1 comprising at least two chromatography units 3 connected in parallel. Such a parallel connection can be called a manifold and is schematically shown in Figure 1. The chromatography system comprises a common inlet 5 to the chromatography units 3 and a common outlet 7 from the chromatography units 3. In Figure 1 four different chromatography units 3 are shown connected in parallel but the number of chromatography units 3 can of course be varied. Each chromatography unit 3 in the embodiment shown in Figure 1 comprises an inlet 3a and an outlet 3b, whereby the inlets 3a are connected to the common inlet 7 and the outlets 3b are connected to the common outlet 9. The chromatography units 3 can be connected to each other in different ways in the chromatography system 1 but at least two of them are connected in parallel according to the invention. According to the invention said at least two chromatography units each comprises a convection-based chromatography material, wherein an initial difference in back pressure provided from the different chromatography units 3 is compensated dynamically during run of the system 1 due to a change of chromatography unit properties provided during the chromatography process.

A convection-based chromatography material is a chromatography material which is not based on diffusion, such as diffusion into porous beads. A convection-based chromatography material can for example be monoliths or membranes, such as membrane adsorbers and can also be called adsorption chromatography. A cellulose fiber membrane is one example of a membrane adsorber. The convection-based chromatography material can be functionalized, for example protein A functionalized.

In one embodiment of the invention each chromatography unit 3 comprises a chromatography material having a chromatography material volume which is dimensioned to allow for a fluid flow rate through said chromatography unit of at least two or at least five chromatography material volumes per minute. The chromatography system 1 comprises hereby a feed pump 11 which is configured to flow a feed fluid through the chromatography units 3 at a fluid flow rate of at least 2 or at least 5 chromatography material volumes per minute through each one of the chromatography units.

The change of chromatography unit properties during the chromatography process can be due to different binding properties, for example binding of protein, in the chromatography material. Hereby the back pressure provided from the different chromatography units 3 will change in dependence of how much protein is bound in the chromatography material. Hereby the fluid flow through the chromatography units will be automatically adjusted during run of the system. Hereby all the units will be utilized optimally. The adjusting of fluid flow through the chromatography units is performed quickly thanks to the relatively high flow rate through the units.

This type of chromatography system 1 can be configured to recycle the fluid flow through the chromatography units 3 at least 10 or at least 20 times or at least 40 times.

Thanks to the quick adjusting of fluid flow in the system according to the invention the different chromatography units 3 of the chromatography system 1 does not need to be exactly identical. Chromatography units 3 which have some smaller differences, for example in initial delta column pressure or chromatography material volume can still be used and the utilization of these chromatography units 3 can still be effective in a chromatography system 1 according to the invention.

In some embodiments of the invention the feed pump 11 is configured to provide a fluid flow rate through each chromatography unit 3 of the system such that a back pressure provided from each of the chromatography units 3 is at least 5 bar.

The functionalised polymeric chromatography media of the present invention can suitably be formed from polymeric nanofibre substrates. Each substrate may be formed of one or more polymer nanofibres. The polymer nanofibres are typically electrospun polymer nanofibres. Such electrospun polymer nanofibres are well known to the person skilled in the art and optimised conditions for their production can be found in, for example, O. Hardick, et al., J.Mater. Sci. 46 (2011) 3890. The processes of the present invention typically comprise an initial step of electrospinning a polymer to produce one or more polymer nanofibres. This may involve electrospinning a polymer to produce one or more non-woven sheets or layers, each comprising one or more polymer nanofibres. Suitably, the sheet(s) or layer(s) (10) each comprise a plurality of nanofibre-nanofibre fusion points (20) as illustrated in Fig. 14. The intralayer fusion points between the individual nanofibres (30) at their junctions provide mechanical stability to the sheets/layers and decrease the risk of nanofibre shedding into liquids during use. The fusion points can suitably be achieved by controlling the temperatures during the electrospinning process such that the deposited nanofibres contact each other before solidification. It can be particularly advantageous to electrospin a polymer solution, in which case the fibres formed solidify by evaporation of a solvent, providing sufficient time for formation of intralayer fusion points before solidification.

Polymer nanofibres for use in the present invention typically have mean diameters from 10 nm to 1000 nm. For some applications, polymer nanofibres having mean diameters from 200 nm to 800 nm are appropriate. Polymer nanofibres having mean diameters from 200 nm to 400 nm may be appropriate for certain applications. The length of polymer nanofibres for use in the present invention is not particularly limited. Thus, conventional electrospinning processes can produce polymer nanofibres many hundreds of meters or even kilometers in length. Typically, though, the one or more polymer nanofibres have a length up to 10 km, preferably from 10 m to 10 km. The polymer nanofibres can suitably be monofilament nanofibres and may e.g. have a circular, ellipsoidal or essentially circular/ellipsoidal cross section.

Typically, the one or more polymer nanofibres are provided in the form of one or more non-woven sheets, each comprising one or more polymer nanofibres. Thus, the substrate is typically formed of one or more non-woven sheets, each comprising one or more polymer nanofibres. A non-woven sheet comprising one or more polymer nanofibres is a mat of said one or more polymer nanofibres with each nanofibre oriented essentially randomly, i.e. it has not been fabricated so that the nanofibre or nanofibres adopts a particular pattern. Non-woven sheets comprising polymer nanofibres are typically provided by known methods, such as that disclosed in O. Hardick, et al., J.Mater. Sci. 46 (2011) 3890. Non-woven sheets may, in certain circumstances, consist of a single polymer nanofibre. Alternatively, non-woven sheets may comprise two or more polymer nanofibres, for example 2, 3, 4, 5, 6, 7, 8, 9 or 10 polymer nanofibres.

Non-woven sheets typically have area densities from 1 to 40 $g/m_2$, preferably from 5 to 25 $g/m^2$, in some circumstances from 1 to 20 or 5 to 15 $g/m^2$. Non-woven sheets can also typically have a thickness from 5 to 120 $\mu$m, preferably from 10 to 100 $\mu$m, in some circumstances from 50 to 90 $\mu$m, in other circumstances from 5 to 40, 10 to 30 or 15 to 25 $\mu$m.

The polymer used to produce the nanofibres used in the processes of the present invention is not particularly limited, provided the polymer is suitable for use in chromatography applications. Thus, typically, the polymer is a polymer suitable for use as a chromatography medium, i.e. an adsorbent, in a chromatography method. Suitable polymers include polyamides such as nylon, polyacrylic acid, polymethacrylic acid, polyacrylonitrile, polystyrene, polysulfones e.g. polyethersulfone (PES), polycaprolactone, collagen, chitosan, polyethylene oxide, agarose, agarose acetate, cellulose, cellulose acetate, and combinations thereof. Polyethersulfone (PES), cellulose, cellulose acetate, and combinations thereof are preferred. In some cases, cellulose, cellulose acetate, and combinations thereof are preferred.

In some embodiments, the substrate comprises one or more nanofibres formed from one or more polymer nanofibres formed from different polymers. Thus, in this embodiment, the substrate comprises one or more different polymers. Typical polymers are as defined above.

Typically, chromatography medium is a functionalised cellulose chromatography medium, prepared from a substrate formed of one or more cellulose acetate nanofibres. Preferably, a substrate is formed of one or more non-woven sheets or layers is provided, each comprising one or more cellulose acetate nanofibres. Cellulose acetate is readily electrospun, typically from a solution of cellulose acetate in one or more organic solvents, and can readily be transformed into cellulose after electrospinning. Thus, preferably the substrate is formed of one or more non-woven sheets/layers, each comprising one or more electrospun cellulose acetate nanofibres.

**Physical modification of nanofibres**

Provision of a substrate may involve physical modification of the polymer nanofibres optionally in the non-woven sheets/layers, prior to a grafting step. Specifically, physical modification may involve heating and/or pressing the polymer nanofibres/non-woven sheets/layers, preferably heating and pressing the polymer nanofibres/non-woven sheets/layers. These steps improve the structural stability of the material. The pressing and heating conditions may also be varied to alter the thickness and/or porosity of the resultant material. Use of multiple non-woven sheets of polymer nanofibres enables a thicker material to be prepared which has a greater capacity for adsorption (once grafted and functionalised). The provision of a substrate typically therefore may comprise providing two or more non-woven sheets/layers stacked one on top of the other, each said sheet comprising one or more polymer nanofibres, and simultaneously heating and pressing the stack of sheets/layers to fuse points of contact between the nanofibres of adjacent sheets/layers, creating interlayer fusion points.

In the case of a cellulose chromatography medium, provision of a substrate typically comprises providing two or more non-woven sheets/layers stacked or folded over one on top of the other, each said sheet/layer comprising one or more cellulose acetate nanofibres, and simultaneously heating and pressing the stack of sheets/layers to fuse points of contact between the nanofibres of adjacent sheets. The functionalised chromatography medium can thus be a stack of a plurality of non-woven polymeric nanofibre layers, with a plurality of interlayer nanofibre-nanofibre fusion points, which bond at least two of the layers to each other. Preferred processing conditions for pressing and heating of polymer nanofibres/nonwoven sheets can be found in US 20160288089 and WO-A-2015/052465.

**Grafting nanofibre substrate**

The preparation of the chromatography medium may involve a grafting step which typically involves grafting one or more neutral polymer chains from the substrate provided. Grafting one or more neutral polymer chains from a substrate typically comprises growing one or more polymer chains from one or more functional groups present on the substrate, optionally in the presence of one or more catalysts. Thus, typically, the substrate comprises one or more functional groups, preferably one or more functional groups from which a polymer chain may be grown. Growing a polymer chain from the one or more functional groups means building up a polymer at the one or more functional groups from individual monomer building blocks. The grafting step typically therefore involves growing polymer chains directly from the substrate, rather than bonding preformed polymer chains to the substrate. Thus, as the polymerisation progresses, individual monomers are added to the ends of growing polymer chains that are anchored distally to the substrate. The polymer coating will then comprise polymer molecules which are single-point covalently tethered to the substrate. The polymer molecules may be linear or branched and even hyperbranched, in which case >50% of the monomer residues are either branch points or terminal monomers. Growth of the polymer chains directly from the substrate enables control over the structure of the polymer coating, particularly using a polymerisation strategy whereby the polymers all grow simultaneously at a uniform rate. This enables formation of a dense and well-defined polymer coating layer. Thus, when the substrate is one or more layers of polymeric nanofibres fused together at their junctions, a well-defined thin coating will be formed - covering the core nanofibres and the fusion points between individual nanofibres. The coating may be a conformal coating, i.e. following the contours of the nanofibres and the fusion points. The thickness of the coating may e.g. be such that the coated nanofibres have an average diameter of 100-1000 nm, such as 100-700 nm or 200-700 nm. The average diameters of the non-coated nanofibres may then e.g. be 100-800 nm, such as 100-600 nm. The average pore size of the layer(s) may e.g. be 200-800 nm and the pore volume fraction may e.g. be 50-90%, such as 60-80%. The average pore size and the average fibre diameters can be calculated from SEM images of the layers and the pore volume fraction can be calculated from the total volume of a layer or substrate (the thickness multiplied by the cross-sectional area) and the specific gravity of the nanofibres. A specific example of a pore volume calculation of a representative multilayer cellulose acetate nanofibre disc is: Disc diameter 32 mm and disc thickness 0.44 mm gives a total volume of 0.354 cm3. The dry weight of the disc is 0.165 g, which with a cellulose acetate specific gravity of 1.31 g/cm3 gives a cellulose acetate volume of 0.126 cm3. The pore volume fraction is thus (0.354 - 0.126)/0.354 = 64 %.

The pore structure of the layers is important for the performance in that a delicate balance between high dynamic binding capacity (large accessible surface and short diffusion paths) and low back pressures (large pores and high pore volume fractions) needs to be met. The grafted nanofibre layers are uniquely suited for meeting this balance with their small fibre diameters and high pore volume fractions. Particularly good combinations are achieved when the layers have the following pore sizes, as obtained from capillary flow porometry with a perfluoropolyether wetting liquid: bubblepoint pore size - 0.9-1.2 $\mu$m, such as 1.0-1.2 $\mu$m; smallest pore size - 0.2-0.4 $\mu$m and/or mean flow pore (MFP) pore size 0.3-0.5 $\mu$m. The measurements should be performed as detailed below in Example 4.

For good flow properties, it is advantageous if the open pore structure of the substrate is retained after the grafting process. In this way, the chromatography medium will have a first side and a second side, fluidically connected to each other through an open, and three-dimensionally connected, pore structure formed by the interstices (interstitial volume) between the grafted polymeric nanofibres. This pore structure is preferably free from, or substantially free from, graft polymer or any homopolymer accidentally formed during the grafting process. This can be achieved by limiting the monomer amounts added during grafting and the absence of any polymer obstructing the pore structure can easily be checked by measuring the flow rate, and/or by observing the pore structure by electron microscopy. The graft polymerisation process offers a unique possibility to introduce a functionalised polymer increasing the binding capacity, without obstructing the pore structure.

EXAMPLE 1

Study: Cycling mAb perfusion harvest on 4x4mL PrismA fiber manifolds

The aim with this study was to show proof-of concept for manifolding of Fibro PrismA units, prepared as disclosed in WO2018011600 and WO2019137869. Four prototype units were selected for a set-up (array) of 4x4mL manifold. The units within the set-up were selected to be similar in DBC and delta column pressure (dCP).

The lifetime study included CIP every 10th cycle using 1.0 M NaOH at a low flow rate in reverse, corresponding to a contact time of 30 minutes. 101 cycles were performed during two days where the first 51 cycles were performed overnight with a depth- and sterile-filtered mAb harvest material at ambient temperature. The last 50 cycles were performed on the next day with a harvest material of low temperature due to cold storage over-night. The low mAb harvest temperature resulted in a pressure increase (jump) from cycle 52 and onward, especially during harvest load.

The purification performance was good with recoveries ≥94%, elution pool volumes close to 4 MV and approximately log 3 reduction of HCP. The ligand leakage level was 26 ppm in the first cycle, however, the ligand leakage decreased over the 101 cycles and the in the bulk pool the concentration was <5 ppm.

The dCP and the DBC was measured on each single unit and the manifold pre-and post-cycling. After the cycling the average dCP for individual units, and the manifold had increased by approximately 30% whereas the DBC post cycling was 97% of the initial capacity.

This study provided additional evidence that manifolding of 4x PrismA fiber units in parallel is feasible. However, the flow rate had to be decreased due to relatively high initial back pressure for these chemistry prototypes.

Disposition of the study

**Cycling 4x4mL PrismA fiber manifold, day 1:**

1. 100 L perfusion mAb harvest was depth filtered and 50 L was further sterile filtered into a single use bag. The remaining 50 L mAb harvest was stored in the cold room over-night.
2. 51 cycles including CIP every 10th cycle with 1.0 M NaOH at a contact time of 30 min were run over night with the depth/sterile-filtered mAb8 harvest.

**Cycling 4x4mL PrismA fiber manifold, day 2:**

3. Remaining 50 L depth filtered material was taken out from storage in cold room and sterile filtered into a single use bag.
4. 50 cycles (cycles 52-101) including CIP every 10th cycle with 1.0 M NaOH at a contact time of 30 min were completed.

The dynamic binding capacity (DBC) and the dCP during equilibration of the manifold and the individual units was determined after cycling.

Terminology

| Term | Comment |
| --- | --- |
| LS | Lab scale |
| PDS | Process development scale |
| PD | Process development |
| NPI | New product introduction |
| POC | Proof of concept |
| 4x4mL | Manifold of four 4 mL units |
| dCP | Delta column pressure |
| CIP | Cleaning-in-place |
| DBC | Dynamic binding capacity |

(continued)

| Term | Comment |
|------|---------|
| BT | Breakthrough |
| QB10% | Dynamic binding capacity at 10% breakthrough |
| PQ | Product quality |

*Table 1 Chemicals*

| Chemical | Product number | Supplier |
|----------|----------------|----------|
| NaH2PO4 x 1 H2O | 1.06346. 1000 | Merck |
| Na2HPO4 x2 H2O | 1.06580.1000 | Merck |
| NaCl | 1.06404.1000 | Merck |
| Acetic acid | 1.00063.1011 | Merck |
| Na-acetate x 3 H2O | 1.06267.1000, | Merck |
| 1.0 M NaOH | | GE Healthcare |
| Tris hydroxymethyl aminomethane (MW 121.14 g/mol) | 1.08382.0500 | Merck |
| Preservation solution for HCP analysis | 3Aug2018/AEÖ | |
| | Opened 2018Nov13 | |
| PBS (SEC running buffer) | 09-9400-100 | Medicago |
| Pre-purified mAb8 sample | LS-032641 | 2018Nov23 |

*Table 2 PrismA fiber 4 mL units in manifold*

| Chemistry | Unit number/ID | DBC (mg/mL) | dCP (MPa) | Position in manifold |
|-----------|----------------|-------------|-----------|----------------------|
| 13BW111 | U2 | 32.5 | 0.51 | 1 |
| 8FL078A | U3 sil | 31.5 | 0.51 | 2 |
| 8FL078A | U2 | 29.7 | 0.54 | 3 |
| 8FL078B | U5 | 31.4 | 0.58 | 4 |

The units were connected in parallel according to the schematic picture in Figure 1 and the photo in Figure 2 by using two 3D printed plastic parts and peek tubing (ID 1.0 mm) which were connected together using finger tight and Luer adapter connectors.

*Table 3 Equipment*

| Equipment | Supplier |
|-----------|----------|
| ÄKTA pilot 600 system (FA and cycling) | GE Healthcare |
| ÄKTA explorer 10 (SEC analysis) | GE Healthcare |
| Spectrophotometer, Spectramax plus | Molecular Devices |

**mAb8 perfusion cell culture harvest**

The cell culture was performed as a 25 L perfusion in a WAVE bioreactor (GE Healthcare). The CHO cells were grown in HyClone CDM4NS0 medium + CellBoost 1 and CellBoost 3 as perfusion medium. The cells were inoculated into the reactor at low volume and the volume was successively increased during three days to full volume. Two days later the perfusion started at a medium exchange rate of 12.5 L/day. Thereafter, as the cell density increased, the perfusion rate was increased to the final rate of 50 L/day. The perfusion was completed after approximately ten days at a cell density of 140x10e6 cells/mL. The mAb concentration in the perfusion increased to a final concentration of approximately 0.5 g/L.

A volume of 167 L from the last three days was obtained from this perfusion culture. The mAb concentration was determined to 0.4 (0.368) mg/mL by Biacore using a mAb standard.

Methods

**Determination of DBC of the individual 4 mL units and the 4x4mL manifolds**

A pre-purified mAb sample was diluted to the concentration of 2 mg/mL in wash 1 buffer (20 mM phosphate, 500 mM NaCl, pH 7). The sample was filtrated (0.22 u) and the mAb concentration was determined after 4 times dilution in wash 1 buffer by measuring the UV absorbance at 280 nm and calculation of the concentration by Beer's law (Equation 1) using 1.48 ml/(mg×cm) as absorptivity coefficient ($\varepsilon$).

$$\textit{Equation 1 Beer's law}$$

$$A = \varepsilon \, L \, c$$

Where A is the UV absorption at 280 nm, $\varepsilon$ is the absorptivity coefficient, L is the path length of the cell holder and c is the concentration of the solution.

Before starting the BT analysis, the mAb sample was injected by-passing the column valve and the 100% UV absorbance at 280 nm was noted.

The fiber units were washed with elution buffer and equilibrated before start of the BT analysis. The Unicorn method for the BT analysis is described below.

**Unicorn method**

**Starting conditions:** Alarm pre-column pressure 1.7 MPa and delta column pressure 1.0 or 1.5 MPa. UV averaging time (Noise reduction) 2.5 s.

Air trap and mixer valves by-pass.

A flow rate of 32 and 128 mL/min was used throughout the method for the single (4 mL) and manifolded units (16 mL) respectively.

*Table 4 Unicorn method*

| Step | Buffer | Volume | Comment |
|------|--------|--------|---------|
| Equilibration (A5) | 20 mM phosphate, 150 mM NaCl, pH 7.4 | 4 MV | |
| Sample load (A4) | mAb at a concentration of 2 g/L | Load until approximately 25% of max absorption at 280 mm of the mAb solution. | Sample flow 32 or 128 mL/min. A watch function was used. |
| Wash (A5) | 20 mM phosphate, 150 mM NaCl, pH 7.4 | 36 MV | |
| Elution 100% B-buffer | 50 mM Na-acetate pH 3.5 | 5 MV | mAb eluate was collected >20 mAU < 100 mAU in outlet 2. |
| Re-equilibration (A5) | 20 mM phosphate, 150 mM NaCl, pH 7.4 | 10 MV | |

The DBC at 10% BT of mAb (QB10%) was approximated to the amount of mAb in mg loaded per mL PrismA fiber at 10% BT by using following procedure:
The delay volume was determined to the volume where 50% of conductivity shift occurred during the transition from equilibration buffer to the mAb sample diluted in 20 mM phosphate buffer containing 500 mM NaCl. The vertical marker reference point was set at 50% conductivity breakthrough and the delta volume was determined to the volume where the A280 nm curve reached 10% of the 100% absorbance of the mAb sample. The delta volume was multiplied by the concentration of the mAb sample and then divided by the volume of the unit (4 mL (single unit) or 16 mL (manifold)).

**Cycling of manifold using depth- and sterile- filtered mAb perfusion harvest including CIP every 10<sup>th</sup> cycle**

The Unicorn method in Table 5 was used with the addition of CIP after the loop phase.

CIP was done in reversed flow (Column 2 up-flow) where 6 MV of 1.0 M NaOH (A4) was applied at a flow rate of 100 mL/min. Then the flow rate was lowered to 6.6 mL/min during application of 12.5 MV (200 mL) 1.0 M NaOH resulting in a CIP contact time of 30 minutes. Re-equilibration was performed for 10 MV after the CIP.

*Table 5 Unicorn method*

| Phase | Buffer/sample | Volume |
|---|---|---|
| Equilibration (A5) before loop | 20 mM phosphate, 150 mM NaCl, pH 7.4 | 4 MV |
| Start of loop, New chromatogram: Sample loading (A3) | mAb harvest (0.4 mg/mL) | 947.2 mL* |
| Wash 1 (A2) | 20 mM phosphate, 0.5 M NaCl, pH 7.0 | 6 MV |
| Wash 2 (A1) | 50 mM acetate pH 6.0 | 12 MV |
| Elution (100% B, B1) | 50 mM acetate pH 3.5 | 9.5 MV, whole peak eluted after approximately 7.5 CV (collection of eluate from 20 to 100 mAU by using a watch function) |
| Re-equilibration (A5) | 20 mM phosphate, 150 mM NaCl, pH 7.4 | 8 MV |

The capacity of the manifold was 29.6 mg/mL which resulted in a load volume of 947.2 mL mAb harvest (titer of 0.4 mg/mL) per cycle for a load of 80% of QB10% (0.8*29.6*16/0.4).

100 L mAb harvest was filtered using two depth filters coupled in parallel (Zeta Plus Capsule filters, E102FSA90ZB05A, 1020 cm2, 3M) into a 200 L bag. Approximately 50 L of the depth filtered mAb harvest was further sterile filtered using a Ulta HC 20" filter into a 50L bag and used for the first 51 cycles. The temperature of this material was close to ambient when starting the cycling. The remaining 50 L depth filtered material was stored in the cold room until use following day for cycles 52-101.

The first 51 cycles were run over night using the scouting scheme according to Table 6.

On the second day the last 50 L of the mAb perfusion harvest were taken out from the cold room and sterile filtered into a 50 L bag using a new Ulta HC 20" filter. This material was still cold when starting the cycles 52-101 according to Table 7.

Samples from all eluates (single cycles, pools of two cycles and bulk pools of 45 cycles) were taken out and prepared for HCP, leaked PrismA ligand, mAb concentration (Biacore and UV) and aggregate concentration by SEC analysis according to paragraphs.

*Table 6 Scouting scheme for cycles 1-51*

| Scouting run | Number of Cycles | Cycle # | Eluate in outlet | CIP |
|---|---|---|---|---|
| 001 | 1 | 1 | 3 | No |
| 002 | 9 | 2-10 | 2 (bulk) | End of cycle 10 |
| 003 | 1 | 11 | 4 | No |
| 004 | 9 | 12-20 | 2 (bulk) | End of cycle 20 |
| 005 | 1 | 21 | 4 | No |
| 006 | 9 | 22-30 | 2 (bulk) | End of cycle 30 |
| 007 | 1 | 31 | 5 | No |
| 008 | 9 | 32-40 | 2 (bulk) | End of cycle 40 |
| 009 | 1 | 41 | 5 | No |
| 010 | 9 | 42-50 | 2 (bulk) | End of cycle 50 |

(continued)

| Scouting run | Number of Cycles | Cycle # | Eluate in outlet | CIP |
|---|---|---|---|---|
| 011 | 1 | 51 | 6 | No |

*Table 7 Scouting scheme for cycles 52-101*

| Scouting run | Number of Cycles | Cycle # | Eluate in outlet | CIP |
|---|---|---|---|---|
| 001 | 9 | 52-60 | 2 (bulk) | End of cycle 60 |
| 002 | 1 | 61 | 3 | No |
| 003 | 9 | 62-70 | 2 (bulk) | End of cycle 70 |
| 004 | 1 | 71 | 4 | No |
| 005 | 9 | 72-80 | 2 (bulk) | End of cycle 80 |
| 006 | 1 | 81 | 5 | No |
| 007 | 9 | 82-90 | 2 (bulk) | End of cycle 90 |
| 008 | 1 | 91 | 5 | No |
| 009 | 9 | 92-100 | 2 (bulk) | End of cycle 100 |
| 010 | 1 | 101 | 6 | No |

**Evaluation of dCP and UV peak area over cycles**

The dCP and UV 300 nm curves were integrated and peaks corresponding to the delta column pressure during loading, elution and re-equilibration as well as the elution peak area were exported to excel using the "Multi result peak compare" function in UNICORN. The pressure peak height (MPa) and the normalized UV300 nm peak area was plotted for the 101 cycles on the manifold.

**Analysis of host cell protein, leaked PrismA ligand and mAb concentration**

450 μL of mAb harvest samples were taken out and mixed with 50 μL preservation solution and stored in the fridge until HCP analysis. 450 μL of eluate samples were taken out and mixed with 50 μL preservation solution and stored in the fridge until HCP and Protein A ligand (PrismA) analysis.

The mAb concentration of the eluates were determined using the UV absorbance at 280 nm on samples diluted five times. 40 μL sample was mixed with 160 μL elution buffer in a UV-readable plate (duplicated dilutions). The UV was measured using path check correction and the concentration was calculated using Beer's law (Equation 1) with 1.48 ml/(mg×cm) as absorptivity coefficient.

**SEC analysis for aggregate concentration determination**

200 μL of the elution samples were distributed in a 96-well plate and analyzed using SEC.

Buffer: PBS, 0.14 M NaCl, 0.0027 M KCl, 0.010 M phosphate, pH 7.4, was prepared by dissolving a buffer tablet (09-9400-100, Medicago) in MQ water and adjusting the final volume to 1 L in a volumetric flask.

Column: Superdex 200 Increase 10/300 GL, code 28-9909-44, lot 10263258 (Expiry 2022-06, ID 0094), CV 23.563 mL.

Unicorn method:

Flow 1 mL/min

Wave lengths: 280, 260 and 215 nm

Alarm pressure 4.50 MPa

Column position 3

Equilibration 1 mL, auto zero UV

Sample injection Partial_905, 50 μL

Isocratic elution for 25 mL

SEC runs with blank (buffer) injections were initially done.

Criteria for acceptance

Manifolds of 4x4mL units with less pressure difference than 0.12 MPa between units initially should perform well in cycling studies, with purity and recovery comparable to MabSelect PrismA.

**Results and discussion**

**101 cycles including CIP every 10th cycle, on the manifold using depth and sterile filtered mAb perfusion harvest**

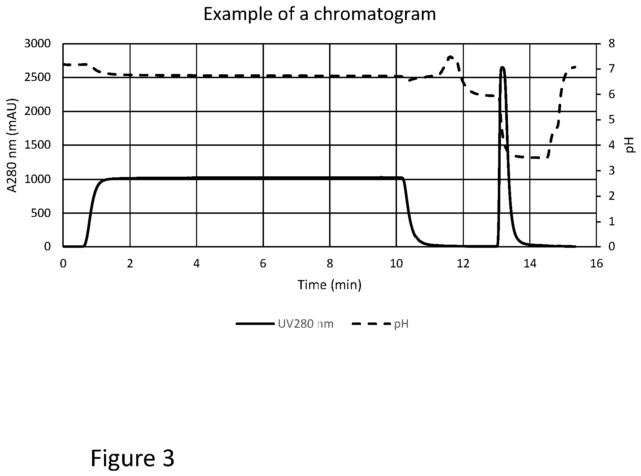

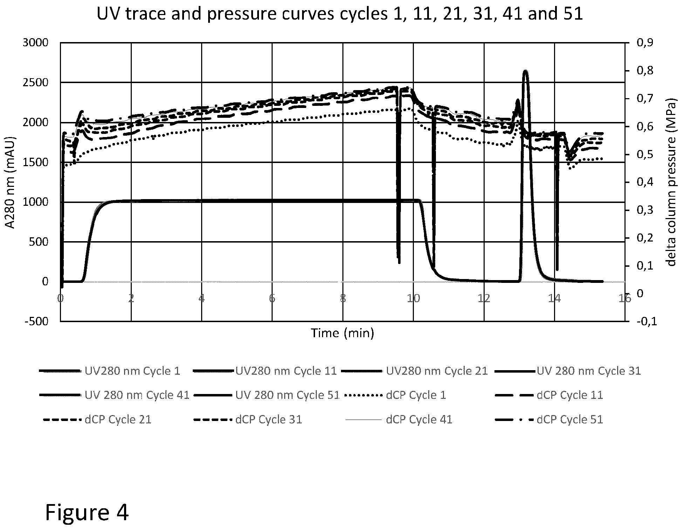

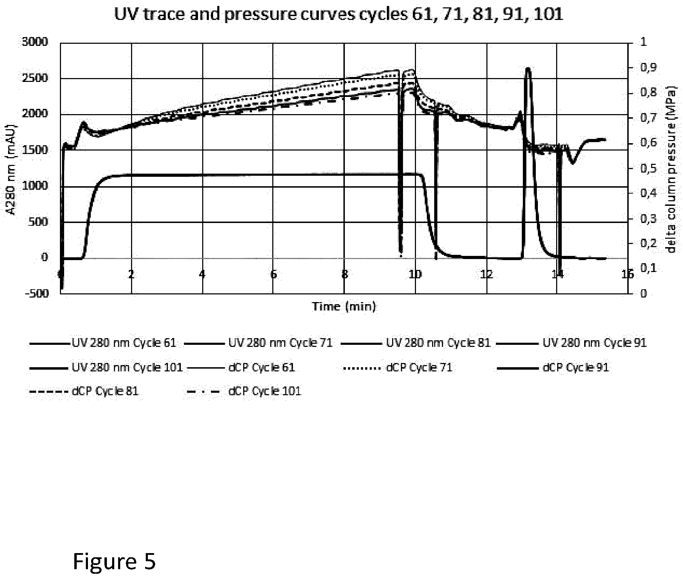

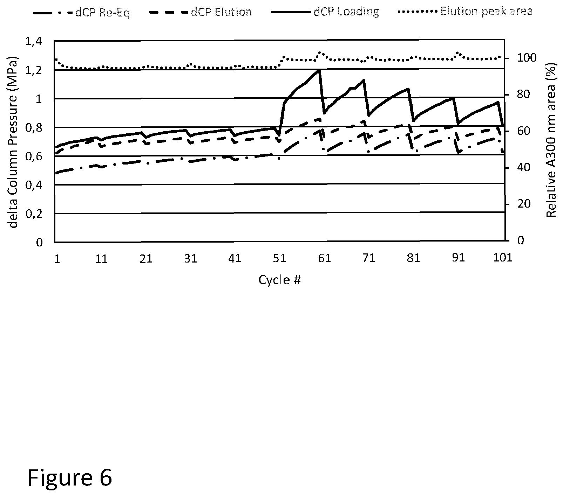

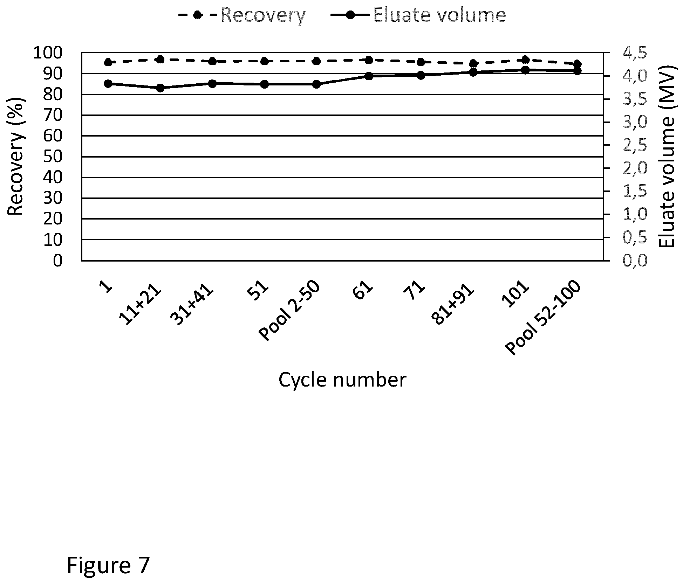

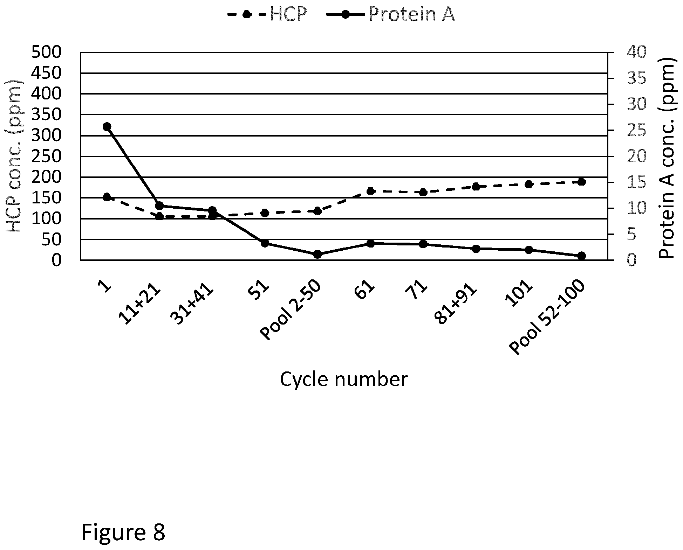

A manifold consisting of four 4mL units made of PrismA fiber from there different chemistry batches was used.
The flow rate throughout the method was set to 100 mL/min. An example of a chromatogram is seen in Figure 3. Due to the low titer of the perfusion harvest material (0.4 mg/mL) the loading phase takes more than 50% of the cycle time.
The 100 L perfusion mAb harvest material had been taken out of the cold room in the morning and kept at room temperature the whole day during the two filtration steps (depth and sterile filtration). Therefore, the harvest material was close to room temperature when the purification started in the afternoon. The first 51 cycles were performed over-night. The last 52-101 cycles were performed on the following day. At that time point, the 50 L mAb harvest depth filtered on previous day, had been kept in the cold room overnight and only kept at room temperature for less than an hour during the sterile filtration. Thus, the harvest material was still cold when starting the cycling.
The dCP during equilibration/re-equilibration in the first cycle was close to 0.5 MPa. The dCP increased approximately 0.1 MPa over the first 51 cycles where the largest pressure increase occurred during the first 10 cycles and then levelled off (Figure 4). The pressure increase was similar for all phases of the chromatography cycle (loading, washes, elution and re-equilibration).
In cycle 52 to 101 the pressure during sample loading was related to the temperature of the mAb harvest material. In the overlay of every 10th cycle 61 to 101 the pressure during loading was highest in cycle 61 and then decreased over cycles as the temperature of the mAb harvest got closer to ambient (Figure 5). The pressure increase over cycles could be mitigated with the CIP.
The dCP for the loading, elution, and re-equilibration phases as well as the relative elution peak area for all cycles is presented in (Figure 6). The effect of the CIP every 10th cycle is clearly seen especially during the last 50 cycles. Even though the pressure increase during loading, related to the temperature of the harvest is significant, the overall pressure during the last 50 cycles is stable.
The recovery was ≥95% and the eluate pools was close to 4 MV for eluates from all cycles (single cycles, pools of eluates from two cycles and the bulk pools which are eluates from 45 cycles) (Figure 7). The HCP concentration ranged between 100 to 200 ppm corresponding to a log purification factor of approximately 3 (Figure 8). The leaked PrismA ligand concentration was highest in the first cycle (26 ppm) but then decreased over cycles to below 5 ppm.

**Product quality of the eluates from cycling of the manifold**

**dCP and DBC of the individual units and manifold before and after cycling**

Before the cycling of the manifold the dCP of the four units ranged between 0.51 to 0.58 MPa as measured during the equilibration phase during BT analysis at a flow rate of 32 mL/min (Figure ). After the cycling the dCP for the four units had increased to different extent with an average increase of 32% which also correlates to the dCP increase of the manifold. Largest difference in pressure between units before cycling was 0.07 MPa and after cycling it was 0.17 MPa. The manifold had a dCP of 0.60 MPa before cycling which had increased to 0.78 MPa after cycling. The DBC and dCP of individual units and the manifold before and after cycling is presented in Table . The post cycling manifold capacity was 28.6 mg/mL which corresponds to 97% of the initial capacity.

*Table 8 Characterization of individual units and manifold pre and post cycling*

| Chemistry/u nit | Position in manifold | dCP (MPa ) pre-cycling | dCP (MPa) post cycling | Pressure change (MPa) | Pressure change (%) | QB10% (mg/mL) pre-cycling | QB10% (mg/mL) post cycling | Remaining capacity (%) |
|---|---|---|---|---|---|---|---|---|
| 13BW111 U2 | 1 | 0.51 | 0.63 | 0.12 | 20 | 32.5 | 31.4 | 97 |
| 8FL078A U3 sil | 2 | 0.51 | 0.66 | 0.15 | 29 | 31.5 | 30.3 | 96 |
| 8FL078A U2 | 3 | 0.54 | 0.8 | 0.25 | 46 | 29.7 | 30.6* | 103 |
| 8FL078B U5 | 4 | 0.58 | 0.76 | 0.18 | 31 | 31.4 | 30.1 | 96 |
| Average individual | | 0.53 | 0.71 | 0.17 | 32 | 31.3 | 30.6 | 98 |
| Manifold 4x4mL | Manifo ld | 0.60 | 0.78 | 0.19 | 32 | 29.6 | 28.6 | 97 |
| *possibly wrong value. | | | | | | | | |

## Conclusions

This study provided additional evidence that manifolding of 4x PrismA fiber units in parallel is feasible. However, the flow rate had to be decreased to 100 mL/min due to relatively high back pressure for these chemistry prototypes. 128 mL/min is aimed for in the project.

- 101 cycles were completed in a study including CIP every 10th cycle with 1.0 M NaOH at a contact time of 30 min.

- A pressure increase (jump) after 51 cycles was related to the low temperature of the harvest material after storage in the cold room.

- The mAb recovery was ≥95% and the eluate pools was close to 4 MV for the eluates from all cycles.

- The HCP concentration ranged between 100 to 200 ppm corresponding to a log purification factor of approximately 3.

- The leaked PrismA ligand concentration was highest in the first cycle (26 ppm) but then decreased over cycles to below 5 ppm.

- After the cycling, the average dCP for individual units, and the dCP for the manifolds had increased by approximately 30% whereas the DBC post cycling and 97%.

- Largest difference in pressure between units in manifold 2 before cycling was 0.07 MPa and after cycling it was 0.17 MPa.

- Increased fouling/back pressure was not related to a specific position in the manifolds.

Pressure and capacity matching of the individual units in a manifold is believed to be crucial for good purification performance. However, it is also assumed that there is an intrinsic balance of pressure and flow within the manifold. If pressure is built up more on one of the units in the manifold compared to the other, the flow through that unit would decrease. This would lead to an increased flow rate during the remaining units with increased pressure build up on these. This self-regulating pressure build up and flow rate through the units would go on and level out any differences between the units at the end, considering that the initial difference between the units is not too large.

## EXAMPLE 2 - Bovine serum albumin (BSA) on two parallel manifolded units functionalized with polyallylamine

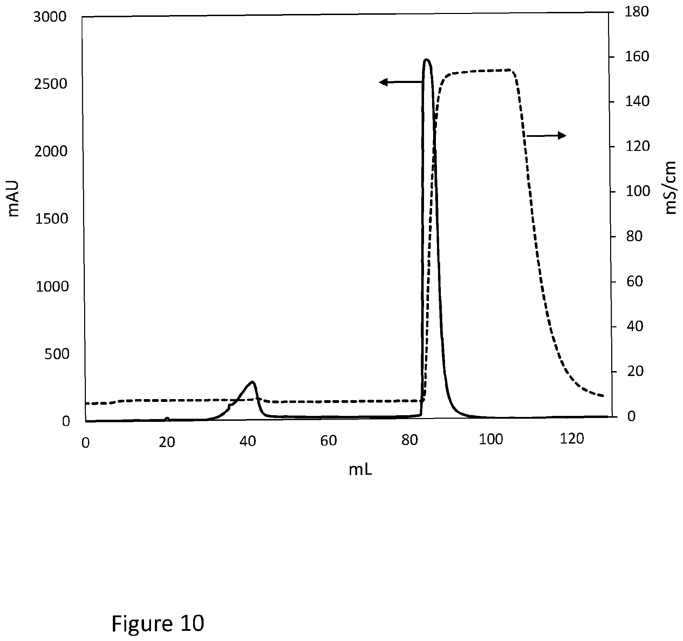

2 mL cellulose nanofiber membranes were grafted with glycidol and treated with divinylsulfone (DVS) as described in WO2018011600 and WO2019137869. They were then reacted with polyallylamine, resulting in an anion exchange functionality. Two of these 2 mL membranes were coupled in parallel and equilibrated in 20 mM Tris pH 8.0 + 100 mM NaCl. A BSA solution in the same buffer was loaded at 50 mL/min flow rate and the membranes were then washed with the equilibration buffer. The adsorbed BSA was then eluted with 20 mM Tris pH 8.0 + 2.0 M NaCl. As seen in Fig. 10, the elution peak was sharp and narrow, indicating that the flow rate was substantially the same over both membranes.

**EXAMPLE 3 - Adeno associated virus (AAV-2) on two parallel manifolded units functionalized with polyallylamine**

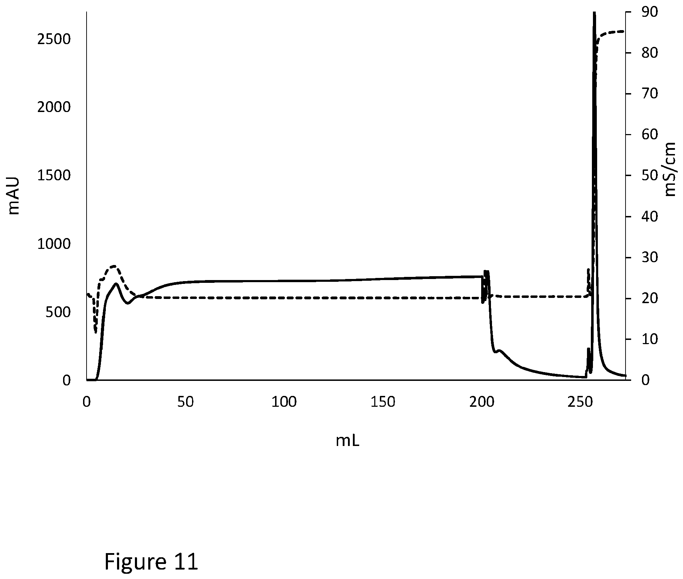

2 mL cellulose nanofiber membranes were grafted with glycidol and treated with divinylsulfone (DVS) as described in WO2018011600 and WO2019137869. They were then reacted with polyallylamine, resulting in an anion exchange functionality. Two of these 2 mL membranes were coupled in parallel and equilibrated in 20 mM Tris pH 8.0 + 100 mM NaCl. A suspension of adeno associated virus serotype 2 (AAV-2) in the same buffer was loaded at 50 mL flow rate and the membranes were then washed with the equilibration buffer. The adsorbed AAV-2 was eluted with 20 mM Tris pH 8.0 + 1.0 M NaCl. As seen in Fig. 11, the elution peak was sharp and narrow, indicating that the flow rate was substantially the same over both membranes.

**EXAMPLE 4 - Pore size measurement by capillary flow analysis**

The equipment used was a POROLUX™ 100 porometer (IB-FT GmbH, Berlin, Germany) and the methodology was as given in Table 9. Further details about the measurement principles can be found on the manufacturer's website http://www.ib-ft.com/measurement_principle.html The three pore sizes obtained from the measurements are smallest pore size, Mean Flow Pore (MFP) size and bubblepoint pore size (the largest pore size).

Table 9: Capillary flow porometry

| Porometer | Porometer model | Porolux 100 |
| --- | --- | --- |
| | Porometer algorithm | Pressure Scan |
| | Measurable pore size | 90 nm-500 $\mu$m |
| | Pressure range | 0-7 bar |
| | Flow rate | up to 100 litre per minute |
| | First Bubble Point | Calculated - according to ASTM F 316-03 |
| Settings used | Calculated bubble point method used | First Flow |
| | Slope of pressure increase | 6.25 mbar/s (160 s/bar) |
| | Number of data points for wet curve | 50 |
| | Number of data points for dry curve | 25 |
| | Test Gas used | Nitrogen |
| | Fluid angle (°) | 0 (Default) |
| | Shape factor name | 1 (Default) |
| | Shape factor | 1 (Default) |
| | Temperature | 21 °C |
| Wetting fluid | Wetting Fluid | Porefil (Perfluoropolyether) |
| | Surface Tension | 16.45 $\pm$0.02 mN/m |
| | Tensiometer method for Wetting Fluid surface tension | 22 °C, 40 % RH |
| | Viscosity | 2.2 mPas |

The results from the capillary flow porometry, as well as estimates of the average nanofibre diameters from SEM images are shown in Table 10. These results are also applicable to the Fibro PrismA and polyallylamine membranes used in Examples 1-3.

Table 10 Pore sizes and nanofibre diameters

| | Avge. fibre diameter ($\mu$m) | Smallest pore ($\mu$m) | MFP ($\mu$m) | Bubblepoint pore ($\mu$m) |
| --- | --- | --- | --- | --- |
| **No-graft Q** | 0.65 | | | |

(continued)

|  | Avge. fibre diameter (μm) | Smallest pore (μm) | MFP (μm) | Bubblepoint pore (μm) |
|---|---|---|---|---|
| **Glycidol Q** | 0.63 | | | |
| **Glycidol DVS Protein A** | 0.61 | 0.234 | 0.399 | 1.09 |

**Claims**

1.  A chromatography process for purification of a target biomolecule, wherein the biomolecule is purified with a chromatography system comprising at least two chromatography units (3) connected in parallel, wherein said at least two chromatography units (3) each comprises a convection-based chromatography material, and wherein an initial difference in back pressure provided from the different chromatography units (3) is compensated dynamically during run of the system due to a change of chromatography unit properties provided during the chromatography process.

2.  The chromatography process according to claim 1, wherein each chromatography unit (3) comprises a chromatography material having a chromatography material volume which is dimensioned to allow for a fluid flow rate through said chromatography unit (3) of at least 2 chromatography material volumes per minute, wherein said system comprises a feed pump (11) which is configured to flow a feed fluid through the chromatography units (3) at a fluid flow rate of at least 2 chromatography material volumes per minute through each one of the chromatography units.

3.  The chromatography process of claim 1 or 2, wherein the change of chromatography unit properties during the chromatography process is due to different binding properties in the chromatography material

4.  The chromatography process according to any one of the preceding claims, wherein the system is configured to recycle the fluid flow through the chromatography units at least 10 or at least 20 times.

5.  The chromatography process according to any one of the preceding claims, wherein the chromatography material is at least one cellulose fiber membrane.

6.  The chromatography process according to claim 5, wherein said at least one cellulose fiber membrane of each chromatography unit is a protein A functionalized cellulose fiber membrane.

7.  The chromatography process according to claim 5, wherein said at least one cellulose fiber membrane of each chromatography unit is an anion exchange functionalized cellulose fiber membrane.

8.  The chromatography process according to claim 5 or 7, wherein said at least one cellulose fiber membrane of each chromatography unit is a polyallylamine functionalized cellulose fiber membrane.

9.  The chromatography process according to any preceding claim, wherein the chromatography material is at least one fiber membrane comprising a plurality of grafted polymer molecules covalently tethered to said fiber membrane and a plurality of ligand groups covalently bound to said grafted polymer molecules, wherein said ligand groups are capable of interacting with the target biomolecule.

10. The chromatography process according to any preceding claim, wherein the chromatography material comprises fibers of diameters 100-1000 nm, such as 100-700 nm or 200-700 nm.

11. The chromatography process according to any preceding claim, wherein the chromatography material has an average pore size of 200-800 nm.

12. The chromatography process according to any preceding claim, wherein the chromatography material has a bubblepoint pore size of 0.9 - 1.2 μm, such as 1.0 - 1.2 μm.

13. The chromatography process according to any preceding claim, wherein the chromatography material has a smallest pore size of 0.2 - 0.4 μm.

14. The chromatography process according to any preceding claim, wherein the chromatography material has a mean flow pore (MFP) size of 0.3 - 0.5 μm.

15. The chromatography process according to any preceding claim, wherein the chromatography material has a pore volume fraction of 50-90%.

16. The chromatography process according to any preceding claim, wherein the chromatography material has a ligand density of 100-2000 μmol ligands per g dry functionalised chromatography medium.

17. The chromatography process according to any one of the claims 2-16, wherein the feed pump is configured to provide a fluid flow rate through each chromatography unit of the system such that a back pressure provided from each of the chromatography units is at least 5 bar.

**Patentansprüche**

1. Chromatografieverfahren zur Aufreinigung eines Zielbiomoleküls, wobei das Biomolekül mit einem mindestens zwei parallel geschalteten Chromatografieeinheiten (3) umfassenden Chromatografiesystem aufgereinigt wird, wobei die mindestens zwei Chromatografieeinheiten (3) jeweils ein konvektionsbasiertes Chromatografiematerial umfassen, und wobei ein anfänglicher Unterschied im Gegendruck, der von den unterschiedlichen Chromatografieeinheiten (3) bereitgestellt wird, während des Betriebs des Systems aufgrund einer Änderung von Chromatografieeinheitseigenschaften, die während des Chromatografieverfahrens bereitgestellt werden, dynamisch kompensiert wird.

2. Chromatografieverfahren nach Anspruch 1, wobei jede Chromatografieeinheit (3) ein Chromatografiematerial umfasst, das Chromatografiematerialvolumen aufweist, das so bemessen ist, dass es eine Fluiddurchflussrate durch die Chromatografieeinheit (3) von mindestens 2 Chromatografiematerialvolumina pro Minute ermöglicht, wobei das System eine Zufuhrpumpe (11) umfasst, die so konfiguriert ist, dass ein Zufuhrfluid durch die Chromatografieeinheiten (3) mit einer Fluiddurchflussrate von mindestens 2 Chromatografiematerialvolumina pro Minute durch jede einzelne der Chromatografieeinheiten strömt.

3. Chromatografieverfahren nach Anspruch 1 oder 2, wobei die Änderung von Chromatografieeinheitseigenschaften während des Chromatografieverfahrens auf unterschiedlichen Bindungseigenschaften in dem Chromatografiematerial beruht.

4. Chromatografieverfahren nach einem der vorstehenden Ansprüche, wobei das System so konfiguriert ist, dass es den Fluiddurchfluss durch die Chromatografieeinheiten mindestens 10 oder mindestens 20-mal recycelt.

5. Chromatografieverfahren nach einem der vorstehenden Ansprüche, wobei das Chromatografiematerial mindestens eine Zellulosefasermembran ist.

6. Chromatografieverfahren nach Anspruch 5, wobei die mindestens eine Zellulosefasermembran jeder Chromatografieeinheit eine Protein-A-funktionalisierte Zellulosefasermembran ist.

7. Chromatografieverfahren nach Anspruch 5, wobei die mindestens eine Zellulosefasermembran jeder Chromatografieeinheit eine Anionenaustauschfunktionalisierte Zellulosefasermembran ist.

8. Chromatografieverfahren nach Anspruch 5 oder 7, wobei die mindestens eine Zellulosefasermembran jeder Chromatografieeinheit eine Polyallylaminfunktionalisierte Zellulosefasermembran ist.

9. Chromatografieverfahren nach einem vorstehenden Anspruch, wobei das Chromatografiematerial mindestens eine Fasermembran ist, die eine Vielzahl von gepfropften Polymermolekülen umfasst, die kovalent an die genannte Fasermembran angekoppelt sind, und eine Vielzahl von Ligandengruppen, die kovalent an die genannten gepfropften Polymermoleküle gebunden sind, wobei die Ligandengruppen fähig sind, mit dem Zielbiomolekül zu interagieren.

10. Chromatografieverfahren nach einem vorstehenden Anspruch, wobei das Chromatografiematerial Fasern mit Durchmessern von 100 - 1000 nm umfasst, wie beispielsweise 100 - 700 nm oder 200 - 700 nm.

11. Chromatografieverfahren nach einem vorstehenden Anspruch, wobei das Chromatografiematerial eine durchschnittliche Porengröße von 200 - 800 nm aufweist.

12. Chromatografieverfahren nach einem vorstehenden Anspruch, wobei das Chromatografiematerial eine Bubblepoint-Porengröße von 0,9 - 1,2 $\mu$m aufweist, wie beispielsweise 1,0 - 1,2 $\mu$m.

13. Chromatografieverfahren nach einem vorstehenden Anspruch, wobei das Chromatografiematerial eine kleinste Porengröße von 0,2 - 0,4 $\mu$m aufweist.

14. Chromatografieverfahren nach einem vorstehenden Anspruch, wobei das Chromatografiematerial eine mittlere Fließporen-(MFP)-Größe von 0,3 - 0,5 $\mu$m aufweist.

15. Chromatografieverfahren nach einem vorstehenden Anspruch, wobei das Chromatografiematerial eine Porenvolumenfraktion von 50 - 90 % aufweist.

16. Chromatografieverfahren nach einem vorstehenden Anspruch, wobei das Chromatografiematerial eine Ligandendichte von 100 - 2000 $\mu$mol Liganden pro g trockenem funktionalisiertem Chromatografiemedium aufweist.

17. Chromatografieverfahren nach einem der Ansprüche 2 - 16, wobei die Zufuhrpumpe so konfiguriert ist, dass sie eine Fluiddurchflussrate durch jede Chromatografieeinheit des Systems bereitstellt, sodass ein Gegendruck, der von jeder der Chromatografieeinheiten bereitgestellt wird, mindestens 5 bar beträgt.

**Revendications**

1. Procédé de chromatographie pour la purification d'une biomolécule cible, dans lequel la biomolécule est purifiée avec un système de chromatographie comprenant au moins deux unités de chromatographie (3) reliées en parallèle, dans lequel chacune desdites au moins deux unités de chromatographie (3) comprend un matériau chromatographique basé sur la convexion, et dans lequel une différence initiale de contre-pression fournie depuis les différentes unités de chromatographie (3) est compensée dynamiquement pendant le fonctionnement du système en raison d'un changement de propriétés d'unité de chromatographie fournies pendant le procédé de chromatographie.

2. Procédé de chromatographie selon la revendication 1, dans lequel chaque unité de chromatographie (3) comprend un matériau chromatographique présentant un volume de matériau chromatographique qui est dimensionné pour permettre un débit de fluide à travers ladite unité de chromatographie (3) d'au moins 2 volumes de matériau chromatographique par minute, dans lequel ledit système comprend une pompe d'alimentation (11) qui est configurée pour faire circuler un fluide d'alimentation à travers les unités de chromatographie (3) à un débit de fluide d'au moins 2 volumes de matériau chromatographique par minute à travers chacune des unités de chromatographie.

3. Procédé de chromatographie de la revendication 1 ou la revendication 2, dans lequel le changement de propriétés d'unité de chromatographie pendant le procédé de chromatographie est dû à des propriétés de liaison différentes dans le matériau chromatographique.

4. Procédé de chromatographie selon l'une quelconque des revendications précédentes, dans lequel le système est configuré pour recycler le flux de fluide à travers les unités de chromatographie au moins 10 ou au moins 20 fois.

5. Procédé de chromatographie selon l'une quelconque des revendications précédentes, dans lequel le matériau chromatographique est au moins une membrane de fibres de cellulose.

6. Procédé de chromatographie selon la revendication 5, dans lequel ladite au moins une membrane de fibres de cellulose de chaque unité de chromatographie est une membrane de fibres de cellulose fonctionnalisée à la protéine A.

7. Procédé de chromatographie selon la revendication 5, dans lequel ladite au moins une membrane de fibres de cellulose de chaque unité de chromatographie est une membrane de fibres de cellulose fonctionnalisée échangeuse d'anions.

**8.** Procédé de chromatographie selon la revendication 5 ou la revendication 7, dans lequel ladite au moins une membrane de fibres de cellulose de chaque unité de chromatographie est une membrane de fibres de cellulose fonctionnalisée à la polyallylamine.

**9.** Procédé de chromatographie selon une quelconque revendication précédente, dans lequel le matériau chromatographique est au moins une membrane de fibres comprenant une pluralité de molécules de polymère greffées fixées de manière covalente à ladite membrane de fibres et une pluralité de groupes ligands liés de manière covalente auxdites molécules de polymère greffées, dans lequel lesdits groupes ligands sont aptes à interagir avec la biomolécule cible.

**10.** Procédé de chromatographie selon une quelconque revendication précédente, dans lequel le matériau chromatographique comprend des fibres de diamètres 100 - 1000 nm, tels que 100 - 700 nm ou 200 - 700 nm.

**11.** Procédé de chromatographie selon une quelconque revendication précédente, dans lequel le matériau chromatographique présente une taille de pore moyenne de 200 - 800 nm.

**12.** Procédé de chromatographie selon une quelconque revendication précédente, dans lequel le matériau chromatographique présente une taille de pore au point de bulle de 0,9 - 1,2 $\mu$m, telle que 1,0 - 1,2 $\mu$m.

**13.** Procédé de chromatographie selon une quelconque revendication précédente, dans lequel le matériau chromatographique présente une plus petite taille de pore de 0,2 - 0,4 $\mu$m.

**14.** Procédé de chromatographie selon une quelconque revendication précédente, dans lequel le matériau chromatographique présente une taille de pore à débit moyen (MFP) de 0,3 - 0,5 $\mu$m.

**15.** Procédé de chromatographie selon une quelconque revendication précédente, dans lequel le matériau chromatographique présente une fraction volumique de pores de 50 - 90%.

**16.** Procédé de chromatographie selon une quelconque revendication précédente, dans lequel le matériau chromatographique présente une densité de ligands de 100 - 2000 $\mu$mol de ligands par g de milieu chromatographique fonctionnalisé sec.

**17.** Procédé de chromatographie selon l'une quelconque des revendications 2-16, dans lequel la pompe d'alimentation est configurée pour fournir un débit de fluide à travers chaque unité de chromatographie du système de telle sorte qu'une contre-pression fournie depuis chacune des unités de chromatographie est d'au moins 5 bar.

Figure 1

Figure 2

Example of a chromatogram

Figure 3

UV trace and pressure curves cycles 1, 11, 21, 31, 41 and 51

Figure 4

UV trace and pressure curves cycles 61, 71, 81, 91, 101

Figure 5

Figure 6

Figure 7

Figure 8

Figure 9

Figure 10

Figure 11

# EP 3 946 671 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20140296464 A1
- US 20160288089 A1
- WO 2018011600 A1
- WO 2018037244 A1
- US 2014263012 A1
- WO 2005077528 A1
- WO 2008127087 A1
- US 20160288089 A
- WO 2015052465 A
- WO 2018011600 A
- WO 2019137869 A

### Non-patent literature cited in the description

- **O. HARDICK et al.** *J.Mater. Sci.*, 2011, vol. 46, 3890